# EUROPÄISCHE PATENTSCHRIFT

(11) **EP 2 214 534 B1**
(45) Veröffentlichungstag und Bekanntmachung des Hinweises auf die Patenterteilung: **30.09.2015**
(21) Anmeldenummer: 08854832.6
(22) Anmeldetag: 19.11.2008
(51) Int. Cl.: A47B 96/00, B65G 1/02, B21D 1/14, B21D 3/00, B23P 6/00

(54) **VERFAHREN ZUR REPARATUR EINER STÜTZE ODER EINER STREBE EINES REGALS**
METHOD FOR REPAIRING A SUPPORT OR A BRACE FOR A SHELF
PROCÉDÉ DE RÉPARATION D'UN MONTANT OU D'UN ÉTAI D'UNE ÉTAGÈRE

(30) Priorität: 29.11.2007 DE 102007057535; 21.01.2008 DE 202008000889 U; 29.03.2008 DE 202008004312 U
(43) Veröffentlichungstag der Anmeldung: 11.08.2010
(73) Patentinhaber: Klein, Egon, 67744 Schweinschied (DE)
(72) Erfinder: Klein, Egon, 67744 Schweinschied (DE)
(74) Vertreter: Müller, Jochen
(86) Internationale Anmeldenummer: PCT/DE2008/001904
(87) Internationale Veröffentlichungsnummer: WO 2009/067990

(56) Entgegenhaltungen:
- US-A1- 2005 150 853
- US-B1- 6 332 549
- ANONYMOUS: "Rack Installation & Rack Repair" BOUDER SERVICES INFORMATIONS, [Online] 8. August 2007 (2007-08-08), XP002520195 Gefunden im Internet: URL:http://web.archive.org/web/20070808225 809/http://www.bouder.com/rack.htm> [gefunden am 2009-03-17]
- ANONYMOUS: "Rack Repair & Protection" INTERNET ARTICLE, [Online] 18. Juli 2007 (2007-07-18), XP002520196 Gefunden im Internet: URL:http://web.archive.org/web/20070718150 004/http://www.macrak.com/> [gefunden am 2009-03-17]

## Beschreibung

Die Erfindung bezieht sich auf ein Verfahren zur Reparatur einer verformten, insbesondere vertikal ausgerichteten, Stütze oder einer horizontal oder schräg verlaufenden Strebe eines Regals.

Die US 2005/0150853 A1 offenbart ein Reparatur- und Verstärkungsset für eine verformte vertikal ausgerichtete Stütze eines Regals mit einem C-förmigen Führungsteil, das an einem Ende einer U-förmigen Basisplatte, die eine quadratische Aussparung an einer Seite aufweist, befestigt ist. Zur Reparatur der Stütze wird zunächst die Basisplatte auf dem Boden befestigt. Nach einem Vorgang des Richtens liegt die verformte Stütze in dem C-förmigen Führungsteil ein, das mit der Stütze verschraubt wird. Nach der Anbringung des Reparatur- und Verstärkungssets trägt die Stütze keine Last. Die Verwendung dieses Reparatur- und Verstärkungssets ist insbesondere in Verbindung mit Stützen mit einer Bodenplatte nachteilig, da die vorhandene Bodenplatte an der deformierten Stütze zunächst entfernt werden muss.

Im Weiteren ist es aus der Praxis bekannt, eine beispielsweise durch einen Zusammenstoß mit einem Gabelstapler deformierte vertikale Stütze oder eine beispielsweise zwischen vertikalen Stützen horizontal oder schräg angeordnete Strebe in einem verschraubten Stützrahmen eines Regals auszutauschen oder im Fall eines geschweißten Stützrahmens den gesamten Stützrahmen zu ersetzen. Dies erfolgt jeweils unter einem erheblichen Aufwand, da oftmals das gesamte Regal leer geräumt werden muss.

Es ist Aufgabe der Erfindung, ein Verfahren der eingangs genannten Art zu schaffen, das bzw. die eine kostengünstige und schnelle Reparatur einer verformten Stütze oder Strebe erlaubt.

Erfindungsgemäß wird die Aufgabe nach dem Verfahren nach Anspruch 1 gelöst.

Bei einer relativ kleinen Beschädigung ist kein separates Richten der Stütze oder der Strebe erforderlich, da das Richten mit der Anbringung der Schiene und der Gegenplatte einhergeht. Die Schiene kann beispielsweise im Querschnitt C-förmig sein. Im Weiteren ist es für die Reparatur der Stütze auch nicht erforderlich, eine Bodenplatte zu installieren, wie es der Stand der Technik lehrt. In Abhängigkeit von der Breite der Stütze bzw. der Strebe oder der Verformung über die Länge der Stütze bzw. Strebe können mehrere Gegenplatten beispielsweise übereinander oder parallel sowie beabstandet zueinander angeordnet werden. Selbstverständlich kann insbesondere die Strebe einen beliebigen Querschnitt aufweisen.

Unterliegt die Stütze oder die Strebe einer derart großen Verformung, dass sie nicht von der Schiene umgriffen wird, wird vor dem Ansetzen der als U-Schiene Hut-Schiene oder Winkel-Schiene ausgebildeten Schiene ein manuelles Richten der Stütze oder der Strebe vorgenommen. Die Stütze oder die Strebe kann im Bedarfsfall erwärmt werden, was in der Regel nicht erforderlich ist.

Ein Reparatur- und Verstärkungsset umfasst eine Schiene zum Umgreifen der Stütze, mindestens einer auf der der Schiene gegenüberliegenden Seite der Stütze anzuordnenden Gegenplatte oder Unterlegscheibe und Schrauben sowie Unterlegscheiben.

Die beispielsweise als C-Schiene oder U-Schiene ausgeführte Schiene ist in einer beliebigen Höhe derart an der Stütze anbringbar, dass sich die zu richtende Verformung in etwa in der Mitte der Schiene befindet. Mittels der Schrauben wird unter Zwischenlage der Unterlegscheiben die Gegenplatte befestigt, um die Verformung der Stütze zu beseitigen, wobei in die Gegenplatte oder die Stütze oder die Unterlegscheibe Gewinde eingearbeitet sind oder entsprechende Muttern eingesetzt werden. Selbstverständlich können die Unterlegscheiben sowohl in genormten Maßen als auch insbesondere mit einem demgegenüber größeren Außendurchmesser und einer größeren Dicke verwendet werden, um den beim Richten der Stütze durch das Anziehen der Schraubverbindungen auftretenden Kräfte stand zu halten. Insgesamt ist festzustellen, dass zur Reparatur verhältnismäßig kleiner Beschädigungen keine Richthilfe eingesetzt werden muss. Da Stützen eines Herstellers oftmals standardisiert gefertigt sind, kann auch ein Reparatur- und Verstärkungsset entsprechend vorgefertigt bevorratet werden. Selbstverständlich ist es nicht zwingend erforderlich, dass die Gegenplatte als ebenes Bauteil ausgebildet ist, vielmehr kann sie in Abhängigkeit von statischen Anforderungen auch als Profil gestaltet sein, ohne den Rahmen der Erfindung zu verlassen. Im Weiteren ist die Breite der Gegenplatte an die konstruktiven Gegebenheiten der Stütze angepasst. Weist beispielsweise die Stütze Sicken auf, kann es erforderlich sein, die Gegenplatte derart zu dimensionieren, dass sie zwischen den Sicken an der Stütze anliegt.

In Ausgestaltung weisen die Schiene und die Gegenplatte Durchgangsbohrungen für die Schrauben auf, die zu einem Lochbild der Stütze korrespondieren. Das Lochbild der Stütze dient zur Einhängung von Horizontalträgern, auf denen Paletten, Gitterboxen, Regalböden oder dergleichen ruhen. Da das Lochbild von Regalen eines Herstellers einheitlich ist, ist der Bearbeitungsaufwand des Reparatur- und Verstärkungssets vor Ort minimiert, da insbesondere keine Bohrungen zur Anbringung der Schiene und der Gegenplatte gefertigt werden müssen. Sind weder in die Gegenplatte noch in die Stütze Gewindebohrungen eingebracht, sind zweckmäßigerweise Muttern für die Schrauben vorgesehen.

Vorzugsweise weist die Gegenplatte eine derartige Breite auf, dass sie zwischen Schenkeln der Stütze einliegt. Aufgrund dieser Maßnahmen ist die Stütze durch das Reparaturund Verstärkungsset in zwei Richtungen zuverlässig gehalten.

Um die Stabilität weitergehend zu erhöhen, ist eine mit der Stütze und der Schiene zu verschraubende Stützplatte vorgesehen, die an mindestens einer Seite einer Fußplatte der Stütze anliegt. Die in der Regel mit dem Boden verschraubte Fußplatte der Stütze bietet eine zuverlässige Anlage für die Stützplatte, wodurch eine Verschiebung des Reparaturund Verstärkungssets mitsamt der Stütze verhindert ist. Mittels der Stützplatte kann eine unmittelbar über der Fußplatte gequetschte Stütze durch die Verschraubung in ihre ursprüngliche Form gebracht werden. Die Stützplatte dient als Anfahrschutz. Zweckmäßigerweise ist die Stützplatte zur Anlage sowohl an der Schiene als auch an der Fußplatte der Stütze mehrfach abgewinkelt.

Ein weiteres Reparatur- und Verstärkungsset kann eine Schiene zum Umgreifen der Strebe, mindestens einer auf der der Schiene gegenüberliegenden Seite der Strebe anzuordnenden Gegenplatte oder Unterlegscheibe und Schrauben, umfassen.

Die insbesondere als C-Schiene oder U-Schiene ausgeführte Schiene ist beliebig derart an der Strebe anbringbar, dass sich die zu richtende Verformung in etwa in der Mitte der Schiene befindet. Mittels der Schrauben wird unter Zwischenlage von Unterlegscheiben die Gegenplatte befestigt, um die Verformung der Strebe zu beseitigen, wobei bei spielsweise in die Gegenplatte Gewinde eingearbeitet sind oder entsprechende Muttern verwendet werden. Selbstverständlich können beliebig große und dicke Unterlegscheiben verwendet werden, um den beim Richten der Strebe durch das Anziehen der Schraubverbindungen auftretenden Kräfte stand zu halten. Es sind auch Unterlegscheiben mit Innengewinde einsetzbar. Da Streben eines Herstellers oftmals standardisiert gefertigt sind, kann auch das Reparatur- und Verstärkungsset entsprechend vorgefertigt bevorratet werden. Selbstverständlich ist es nicht zwingend erforderlich, dass die Gegenplatte als ebenes Bauteil ausgebildet ist, vielmehr kann sie in Abhängigkeit von statischen Anforderungen auch als Profil gestaltet sein, ohne den Rahmen der Erfindung zu verlassen. Im Weiteren ist selbstverständlich die Breite der Gegenplatte an die konstruktiven Gegebenheiten der Strebe bzw. der Schiene angepasst.

Die Schiene weist in längsseitigen Flanschen und die Gegenplatte im Bereich der Flansche zueinander korrespondierende Durchgangsbohrungen für die Schrauben auf. Sonach ist die Strebe von der Schiene und der daran befestigten Gegenplatte umgriffen. Selbstverständlich erstrecken sich die Flansche nach außen, damit die Strebe zwischen den Schenkeln der Schiene fixiert ist und die Schenkel der Strebe weisen eine derartige Höhe auf, dass die Strebe bei angezogenen Schrauben fest zwischen der Gegenplatte und der Schiene eingespannt ist. Die Breite der Gegenplatte ist an das von den Außenkanten der Flansche bestimmte Außenmaß der Schiene angepasst.

Ein weiteres Reparatur- und Verstärkungsset kann zwei Schienen mit längsseitigen, korrespondiert gelochten Flanschen zum jeweils teilweisen Umgreifen der Stütze und Schrauben sowie Unterlegscheiben umfassen.

Die Schienen sind, wie bereits zuvor geschildert, in einer beliebigen Lage derart an der Strebe anbringbar, dass sich die zu richtende Verformung in etwa in der Mitte der Schienen befindet. Mittels der Schrauben werden, gegebenenfalls unter Zwischenlage von Unterlegscheiben, die beiden Schienen aneinander befestigt, um die Verformung der Strebe zu beseitigen und die derart gerichtete Strebe zu verstärkten.

Um die zu richtende und zu verstärkende Strebe formschlüssig zu umgreifen, ist zweckmäßigerweise die Schiene als Hut-Schiene, U-Schiene oder Winkel-Schiene ausgebildete.. Sind weder in die Gegenplatte noch in eine der Schienen Gewindebohrungen eingebracht, sind Muttern für die Schrauben vorgesehen.

Zur Erzielung einer hohen Stabilität der Stütze bzw. Strebe erstrecken sich die Schenkel der Schiene über die Tiefe oder zumindest teilweise über die Breite der Strebe oder über die Tiefe der Stütze. Sind beispielsweise zwei Schienen vorgesehen, erstrecken sich die Schienen insbesondere jeweils teilweise über die Breite der Strebe. Bei der Anordnung einer Schiene und einer Gegenplatte verläuft die Schiene mit ihren Schenkeln entweder über die komplette Tiefe oder die komplette Breite der Strebe.

Die Schiene kann eine Länge aufweisen, die im Wesentlichen einer Fachhöhe des Regals oder der Länge der Strebe entspricht. Zweckmäßigerweise sind Muttern für die Schrauben vorgesehen.

Alternativ sind die Durchgangsbohrungen der im Querschnitt insbesondere profilierten oder winkelförmigen Gegenplatte oder einer der Schienen mit Gewinde für die Schrauben versehen.

Durch die profilierte oder winkelförmige Gestaltung versteift die Gegenplatte die Stütze bzw. Schiene in zwei Richtungen, nämlich entsprechend der Ausrichtung ihrer Schenkel. Zwischen die Schenkel der Stütze oder Schiene lassen sich beispielsweise zwei parallel zueinander ausgerichtete winkelförmige Gegenplatten einbringen, die gegebenenfalls zueinander beabstandet sind. Somit sind Stützen bzw. Schienen unterschiedlicher Breite relativ einfach unter Verwendung von zwei Gegenplatten zu richten und zu verstärken. Selbstverständlich kann die Gegenplatte auch T-förmig gestaltet sein.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand zweier Ausführungsbeispiele unter Bezugnahme auf die zugehörigen Zeichnungen näher erläutert. Es zeigt:

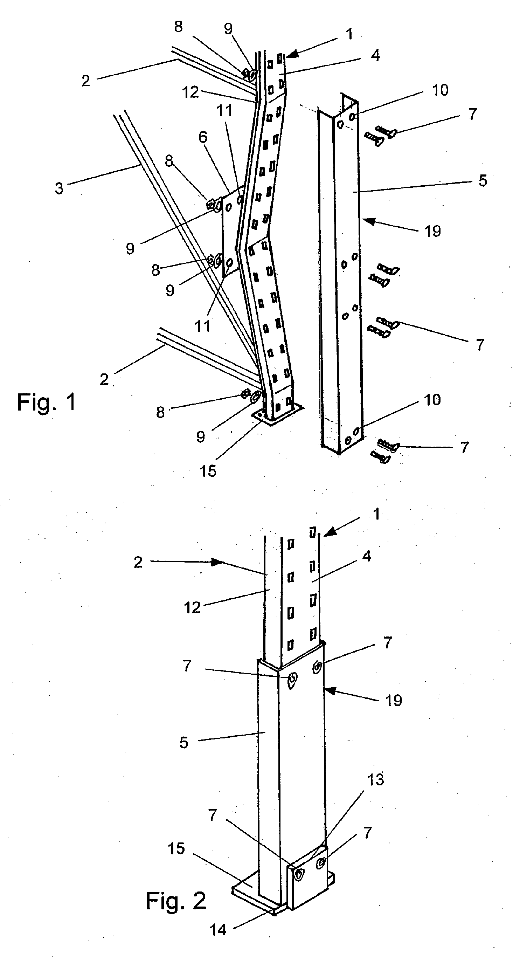

- Fig.1: eine perspektivische Teildarstellung eines Regals mit einer verformten Stütze und einem Reparaturund Verstärkungsset, das nicht von den Ansprüchen umfasst ist,
- Fig.2: eine perspektivische Teildarstellung nach Fig. 1 mit einem alternativen Reparatur- und Verstärkungsset, das nicht von den Ansprüchen umfasst ist,

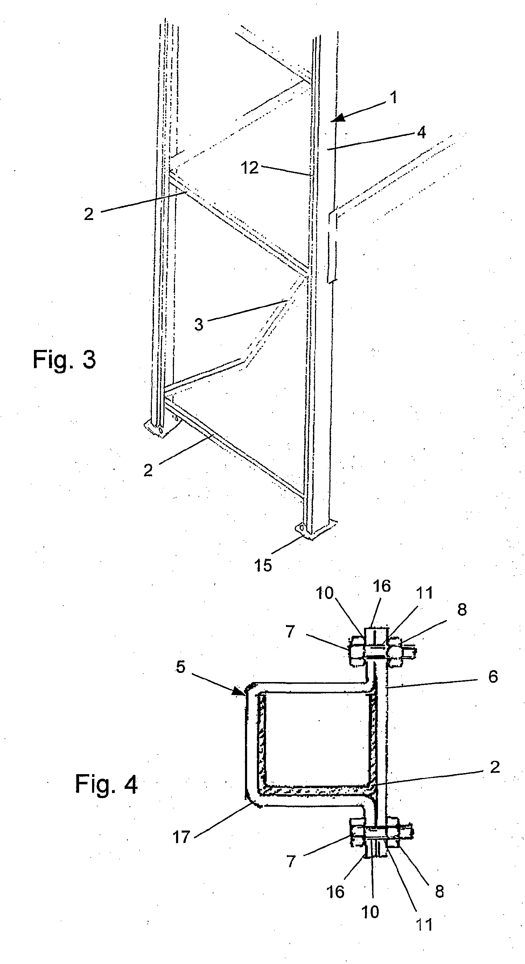

- Fig.3: eine alternative perspektivische Teildarstellung des Regals,
- Fig.4: eine Schnittdarstellung einer horizontalen Strebe des Regals nach Fig. 3 mit einem Reparatur- und Verstärkungsset in weiterer alternativer Ausgestaltung, das nicht von den Ansprüchen umfasst ist,
- Fig.5: eine perspektivische Darstellung einer diagonalen Strebe des Regals nach Fig. 3 mit einem Reparaturund Verstärkungsset in einer dritten alternativer Ausgestaltung, das nicht von den Ansprüchen umfasst ist,
- Fig.6: ein Schnitt durch die Darstellung nach Fig. 5,
- Fig.7: eine Schnittdarstellung einer diagonalen Strebe des Regals nach Fig. 3 mit einem Reparatur- und Verstärkungsset in vierter alternativer Ausgestaltung, das nicht von den Ansprüchen umfasst ist,
- Fig.8: eine Schnittdarstellung einer Strebe des Regals nach Fig. 3 mit einem Reparatur- und Verstärkungsset in fünfter alternativer Ausgestaltung, das nicht von den Ansprüchen umfasst ist,
- Fig.9: eine Schnittdarstellung einer alternativen Strebe des Regals nach Fig. 3 mit einem Reparatur- und Verstärkungsset nach Fig. 6.

Das Regal dient zur Aufnahme von mit Gütern beladenen Paletten, Gitterboxen, Lagerböden oder dergleichen und ist aus mehreren vertikalen Stützen 1 zusammengesetzt, wobei jeweils zwei benachbarte Stützen 1 mittels versteifender horizontaler Streben 2 und diagonaler Streben 3 zu einem Ständerpaar verbunden sind. Jede der Stützen 1 und Streben 2, 3 besteht aus einem mehrfach abgekanteten Blechprofil, wobei der eine Schenkel 4 der Stütze 1 mit einem Lochbild für hakenartige Einhängenasen von Horizontalträgern versehen ist, und die Stütze 1 mittels einer Fußplatte 15 auf dem Boden steht.

Das nicht von den Ansprüchen umfasste Reparatur- und Verstärkungsset umfasst eine als U-Schiene 19 ausgebildete Schiene 5 zum Umgreifen der Stütze 1, eine Gegenplatte 6 und Schrauben 7 mit Muttern 8 sowie Unterlegscheiben 9.

Im Fall einer Verformung der Stütze 1, beispielsweise durch eine Kollision mit einem Gabelstapler, wird die U-Schiene 19 derart angebracht, dass sich der verformte Bereich der Stütze 1 in etwa in der Mitte der U-Schiene 19 befindet. Durch Durchgangsbohrungen 10 in der U-Schiene 19, die zu dem Lochbild der Stütze 1 korrespondieren, werden die Schrauben 7 gesteckt. Auf der der U-Schiene 19 abgewandten Seite der Stütze 1 wird die Gegenplatte 6 mit ihren Durch-gangsbohrungen 11 auf die Schrauben 7 gesetzt. Hiernach ist die Gegenplatte 6 zwischen den Schenkeln 12 der Stütze 1 fixiert. Nach dem Aufsetzen der Unterlegscheiben 9 werden die Muttern 8 auf die Schrauben 7 gedreht. Mit dem Anziehen der Schraubverbindungen geht ein Richten der Verformung der Stütze 1 einher.

Um eine zusätzliche Stabilität zu erzielen und einen Anfahrschutz bereit zu stellen, ist eine mit der Stütze 1 und der U-Schiene 19 zu verschraubende Stützplatte 13 vorgesehen, die an einer Seite 14 der Fußplatte 15 der Stütze 1 anliegt.

Bei einer beispielsweise durch eine Kollision mit einem Gabelstapler verursachten Verformung einer der Streben 2, 3 wird die Strebe 2, 3 zunächst gerichtet und anschließend die Schiene 5 derart angebracht, dass sich der verformte Bereich der Strebe 2, 3 in etwa in der Mitte der Schiene 5 befindet. Die Schiene 5 zum Umgreifen der Strebe 2, 3 ist mit längsseitigen Flanschen 16 versehen und als Hut-Schiene 17 ausgebildet, in die Durchgangsbohrungen 10 zum Festlegen der sich über die Breite der Schiene 5 mitsamt Flanschen 16 erstreckenden Gegenplatte 6 mit Schrauben 7 und Muttern 8 eingearbeitet sind. Die Hut-Schiene 17 umgreift die Strebe 2, 3 über ihre Breite.

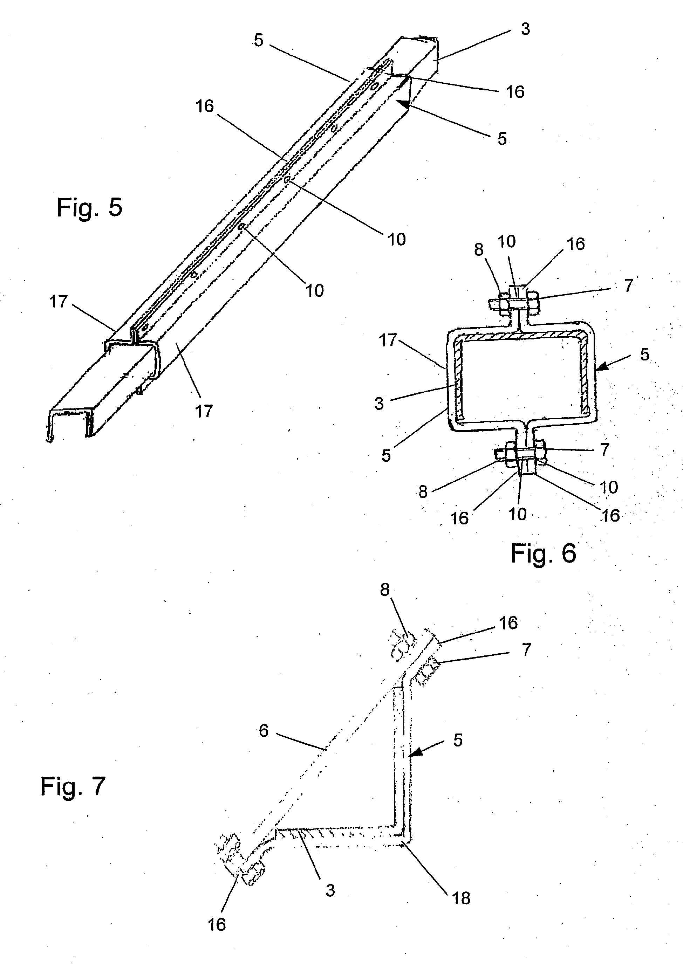

Gemäß den Fig. 5 und 6 umfasst das nicht von den Ansprüchen umfasste Reparatur- und Verstärkungsset zwei als Hut-Schienen 17 ausgebildete Schienen 5 zum jeweils teilweisen Umgreifen der U-förmig abgewinkelten Strebe 2, 3. Jede Hut-Schiene 17 weist längsseitige Flansche 16 auf, in die Durchgangsbohrungen 10 zum gegenseitigen Festlegen mit den Schrauben 7 und Muttern 8 eingelassen sind.

Das nicht von den Ansprüchen umfasste Reparatur- und Verstärkungsset nach Fig. 7 ist zur Verwendung an der winkelförmig ausgebildeten Strebe 3 geeignet und umfasst die als Winkel-Schiene 18 ausgeführte Schiene 5 zum jeweils teilweisen Umgreifen der Strebe 3. Die Schenkel der Winkel-Schiene 18 weisen die längsseitigen Flansche 16 auf, in die Durchgangsbohrungen 10 zum Festlegen der Gegenplatte 6 mit den Schrauben 7 und Muttern 8 eingelassen sind.

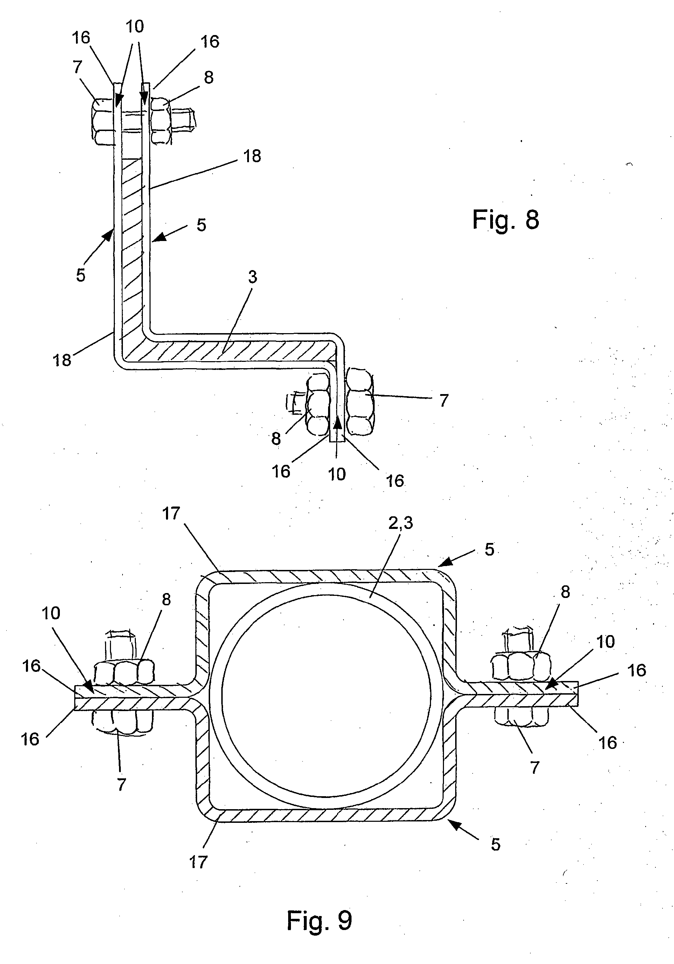

Das nicht von den Ansprüchen umfasste Reparatur- und Verstärkungsset gemäß Fig. 8 ist zur Verwendung an der winkelförmig ausgebildeten Strebe 3 geeignet und umfasst zwei als Winkel-Schienen 18 ausgeführte Schienen 5 zum beidseitigen überdecken der Strebe 3. Die Schenkel der Winkel-Schiene 18 weisen die längsseitigen Flansche 16 auf, in die die Durchgangsbohrungen 10 zum gegenseitigen Festlegen mit den Schrauben 7 und Muttern 8 eingebracht sind. Demnach befindet sich zu beiden Seiten der Strebe 3 jeweils eine Schiene 5, um die deformierte Strebe 3 zu richten und zu versteifen, damit sie ihren statischen Anforderungen innerhalb des Regals wieder gerecht wird und das Regal gefahrlos voll belastbar ist.

Entsprechend Fig. 9 ist die rohrförmige Strebe 2, 3 im Querschnitt zylindrisch ausgebildet und das nicht von den Ansprüchen umfasste Reparatur- und Verstärkungsset umfasst die beiden als Hut-Schienen 17 ausgebildeten Schienen 5 zum jeweils teilweisen Umgreifen der Strebe 2, 3. Jede Hut-Schiene 17 weist längsseitige Flansche 16 auf, in die Durchgangsbohrungen 10 zum gegenseitigen Festlegen mit den Schrauben 7 und Muttern 8 eingelassen sind.

## Patentansprüche

1. Verfahren zur Reparatur einer verformten, insbesondere vertikal ausgerichteten, Stütze (1) mit einer Fußplatte (15) oder einer horizontal oder schräg verlaufenden Strebe (2, 3) eines Regals, wobei im Bereich der Verformung mindestens eine die Stütze (1) oder die Strebe (2, 3) umgreifende Schiene (5) und auf der gegenüberliegenden Seite mindestens eine mit der Stütze (1) oder der Strebe (2, 3) und der Schiene (5) zu verschraubende Gegenplatte (6) oder Unterlegscheibe oder eine weitere mit der ersten Schiene (5) zu verschraubende Schiene (5) angeordnet wird, wobei vor dem Ansetzen der als U-Schiene (19), Hut-Schiene (17) oder Winkel-Schiene (18) ausgebildeten Schiene (5) ein manuelles Richten und mit dem Verschrauben ein Richten der Stütze (1) oder der Strebe (2, 3) vorgenommen wird, und wobei die Schiene (5) in beliebiger Höhe derart an der Stütze (1) angebracht wird, dass sich die Verformung in etwa in der Mitte der Schiene (5) befindet.

2. Verfahren nach Anspruch 1, **dadurch gekennzeichnet, dass** die Stütze (1) oder die Strebe (2, 3) beim manuellen Richten erwärmt wird.

## Claims

1. Method for repairing a deformed, in particular vertically oriented, support (1) with a baseplate (15) or a horizontally or obliquely extending brace (2, 3) of a shelf unit, wherein there is arranged, in the region of the deformation, at least one rail (5) which encloses the support (1) or the brace (2, 3), and, on the opposite side, at least one counter-plate (6) or washer which is to be screwed to the support (1) or the brace (2, 3) and the rail (5), or a further rail (5) which is to be screwed to the first rail (5), wherein a manual straightening operation is carried out before applying the rail (5), which takes the form of a U-rail (19), a top-hat rail (17) or an angle rail (18), and straightening of the support (1) or the brace (2, 3) is carried out by means of the screwing operation, and wherein the rail (5) is mounted on the support (1) at any desired height in such a way that the deformation is situated approximately in the centre of the rail (5).

2. Method according to Claim 1, **characterized in that** the support (1) or the brace (2, 3) is heated during the manual straightening operation.

## Revendications

1. Procédé de réparation d'un montant (1) déformé, en particulier orienté verticalement, avec une plaque de base (15) ou d'un étai (2, 3) s'étendant horizontalement ou obliquement d'une étagère, au moins un rail (5) s'engageant autour du montant (1) ou de l'étai (2, 3) étant disposé dans la région de la déformation et au moins une plaque conjuguée (6) devant être vissée au montant (1) ou à l'étai (2, 3) et au rail (5), ou une rondelle de fixation ou un autre rail (5) devant être vissé au premier rail (5) étant disposé(e) du côté opposé, un alignement manuel et un alignement par vissage du montant (1) ou de l'étai (2, 3) étant effectués avant l'application du rail (5) réalisé en forme de rail en U (19), de rail en chapeau (17) ou de rail coudé (18), et le rail (5) étant monté à une hauteur quelconque contre le montant (1) de telle sorte que la déformation se trouve approximativement au milieu du rail (5).

2. Procédé selon la revendication 1, **caractérisé en ce que** le montant (1) ou l'étai (2, 3) est chauffé lors de l'alignement manuel.
